(19) Europäisches Patentamt
European Patent Office
Office européen des brevets

(11) EP 0 280 297 B1

(12) EUROPEAN PATENT SPECIFICATION

(45) Date of publication and mention of the grant of the patent:
**29.05.1996 Bulletin 1996/22**

(51) Int Cl.[6]: **C08K 5/52**, C08F 297/08, C08L 53/00, C08L 23/12

(21) Application number: **88102820.3**

(22) Date of filing: **25.02.1988**

(54) **High stiffness propylene polymer composition**

Propylen-Polymer-Zusammensetzung mit hoher Steifigkeit

Composition d'un polymère de propylène rigide

(84) Designated Contracting States:
**BE DE FR GB**

(30) Priority: **26.02.1987 JP 43756/87**
**02.03.1987 JP 47319/87**

(43) Date of publication of application:
**31.08.1988 Bulletin 1988/35**

(73) Proprietor: **CHISSO CORPORATION**
**Osaka-shi Osaka 530 (JP)**

(72) Inventors:
- **Nakazima, Hirokazu 17, Higashi 2-chome Chiba (JP)**
- **Suzuki, Akio 17, Higashi 2-chome Chiba (JP)**

(74) Representative: **Hansen, Bernd, Dr.rer.nat. et al**
**Hoffmann, Eitle & Partner**
**Patentanwälte**
**Postfach 81 04 20**
**81904 München (DE)**

(56) References cited:
**EP-A- 0 068 326** **EP-A- 0 098 077**

- **DATABASE WPIL Section Ch, Week 8235, Derwent Publications Ltd., London, GB; Class A32, AN 82-73612**
- **DATABASE WPIL Section Ch, Week 8321, Derwent Publications Ltd., London, GB; Class A17, AN 83-49748**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 280 297 B1

## Description

### FIELD OF THE INVENTION

This invention relates to a propylene polymer composition having high stiffness and high melt visco-elasticity, and more particularly, to a high stiffness and high melt viscoelasticity propylene polymer composition having markedly improved stiffness and heat distortion resistance.

### BACKGROUND OF THE INVENTION

Propylene polymers generally have excellent moldability, chemical resistance, and electrical and mechanical properties and have thus been used in various applications in the form of injection molded articles, blow molded articles, films, sheets, and fibers. However, sheets obtained from propylene polymers encounter various problems on post-processing, such as rapid sagging on thermoforming, narrow ranges of post-processing conditions, low post-processing efficiencies, large sags in case of using a wide sheet for thermoforming, tendency to produce formings having a non-uniform thickness or wrinkles on the lap, and the like. Therefore, the state-of-the-art propylene polymer sheets for post-processing have been utilized only for producing small-sized articles. Further, when propylene polymers are blow molded, the molded articles have a non-uniform thickness due to a large draw-down of a parison at the time of molding so that application of blow molding process has been limited to production of small-sized articles. Use of high-molecular weight propylene polymer in blow molding in order to prevent such draw-down tends to deteriorate fluidity, increase a molding load, incur a great energy loss, and cause mechanical troubles upon molding, and also the resulting molded articles suffer serious surface roughening which would impair a commercial value of the products.

Moreover, the propylene polymers are limited in their application because they fail to satisfy property requirements as demanded in some applications. In particular, they are inferior to a polystyrene resin, an ABS resin, a polyester resin, etc. in terms of stiffness properties, such as stiffness and heat distortion resistance, which has constituted a serious hindrance to broadening of application of the propylene polymers. Accordingly, an improvement in stiffness properties would lead not only to reduction of wall thickness of molded articles which contributes to saving of resources but also to speeding up of cooling of molded articles which contributes to increase of molding rate per unit time, i.e., productivity rate.

In addition, molded articles of the propylene polymers do not always exhibit sufficient impact resistance and are, therefore, unsuitable for use under impact or in low temperatures. In general, since stiffness properties of plastic materials including stiffness and heat distortion resistance are inconsistent with impact resistance, it is often quite difficult to effect improvement on both of these properties at the same time. Hence, it has been keenly demanded to improve not only impact resistance but stiffness properties of the propylene polymers to thereby extend the application thereof and the demand therefor. Improvements in these physical properties would make it possible to apply propylene polymers to fields where other general-purpose resins, e.g., a high-impact polystyrene (HIPS) resin and an ABS resin, are employed.

Several attempts have been made to increase impact resistance of propylene polymers. In particular, it is well known to block copolymerize propylene with ethylene. The resulting ethylene-propylene block copolymer, however, shows considerably decreased stiffness properties although it has greatly increased low temperature impact resistance, as compared with a propylene homopolymer.

In an attempt of improving the above-mentioned post-processability of a sheet, blow moldability, and stiffness properties of propylene polymers, the inventors previously proposed a propylene homopolymer having a specific molecular weight distribution and a specific isotactic pentad ratio as disclosed in Japanese Patent Application No. JP-A-58219207 The inventors also proposed an ethylene-propylene block copolymer having a specific molecular weight distribution which is obtained by polymerization in the presence of a specific catalyst as disclosed in Japanese Patent Application No. JP-A-62149711. Further, it is well known to incorporate an organic nucleating agent, e.g., aluminum p-t-butylbenzoate, 1·3,2·4-dibenzylidene sorbitol, etc., into propylene polymers for the purpose of improving stiffness properties.

The above-described propylene homopolymer having a specific molecular weight distribution and a specific isotactic pentad ratio or ethylene-propylene block copolymer having a specific molecular weight distribution exhibits satisfactory post-processability of a sheet and blow moldability for practical use, but its stiffness properties are still unsatisfactory although relatively improved. A composition obtained by incorporating the above-described organic nucleating agent into such a propylene homopolymer or ethylene-propylene block copolymer (hereinafter referred to as "propylene polymer composition") shows considerable improvements of stiffness properties but is still unsatisfactory for use in applications demanding high stiffness and heat -distortion resistance.

European patent application EP-A-0068326 discloses bis-phenyl phosphates, phosphonates and phosphinates as clarifiers for polyolefin resins. These bis-phenyl phosphates are indicated to be cyclic. In addition, a composition

described in this application comprises a propylene homopolymer.

European patent application EP-A-0098077 discloses high rigidity, high melt-viscoelasticity polypropylene and a process for producing the same. A propylene homopolymer or a ethylene propylene copolymer may be utilized in this particular invention.

## SUMMARY OF THE INVENTION

One object of this invention is to provide a propylene polymer composition which is markedly excellent in post-processability of a sheet when molded into a sheet, blow moldability, stiffness, and thermal distrotion resistance.

The inventors have conducted intensive and extensive investigations in order to overcome the disadvantages associated with the above-described composition comprising a propylene homopolymer or ethylene-propylene block copolymer and a nucleating agent. As a result, it has now been found that these problems can be settled by compounding a phosphate compound represented by formula (I) shown below into a propylene homopolymer or ethylene-propylene block copolymer having a specific molecular weight distribution and a specific isotactic pentad ratio (P). The present invention has been completed based on this finding.

Formula (I) is represented by

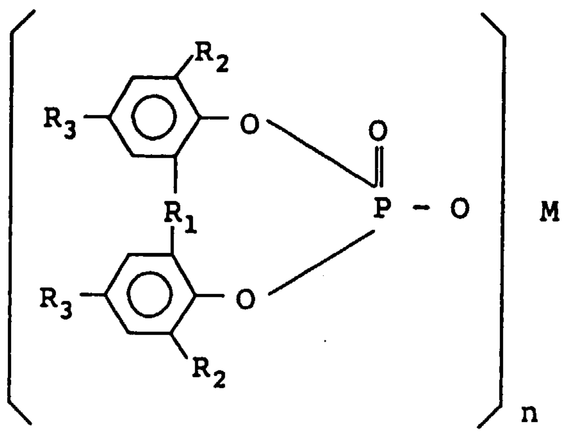

(I)

wherein $R_1$ represents a single bond, a sulfur atom or an alkylidene group having from 1 to 4 carbon atoms; $R_2$ and $R_3$, which may be the same or different, each represents a hydrogen atom or an alkyl group having from 1 to 8 carbon atoms; M represents a mono- to trivalent metal atom; and n represents an integer of from 1 to 3.

The present invention relates to a propylene polymer composition comprising 100 parts by weight of a crystalline propylene homopolymer obtained by polymerizing propylene in at least two stages in such a manner that from 35 to 65% by weight of the total polymer is produced in the first stage and from 35 to 65% by weight of the total polymer is produced in the second and subsequent stages, the polymer portions produced in the respective stages having an intrinsic viscosity [η] which statisfies relationship (1):

$$3.0 \leqq [\eta]_H - [\eta]_L \leqq 6.5 \quad (1)$$

wherein $[\eta]_H$ is an intrinsic viscosity of a polymer portion having the highest molecular weight; and $[\eta]_L$ is an intrinsic viscosity of a polymer portion having the lowest molecular weight, and the isotactic pentad ratio (P) of the total polymer and the melt flow rate (MFR) of the total polymer as measured at 230°C under a load of 2.16 kg satisfying a relationship (2):

$$1.00 \geqq P \geqq 0.015 \log MFR + 0.955 \quad (2)$$

and from 0.01 to 1 part by weight of a phosphate compound represented by formula (I):

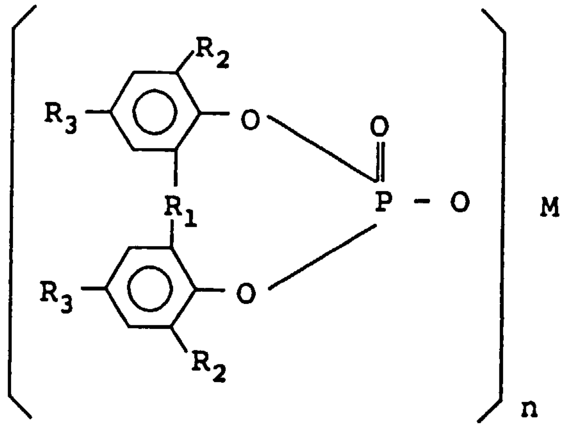

(I)

wherein $R_1$, $R_2$, $R_3$, M, and n are as defined above.

The present invention further relates to a propylene polymer composition comprising 100 parts by weight of a crystalline ethylene-propylene block copolymer obtained by copolymerization in two steps in such a manner that in the first step propylene or a mixture of propylene and not more than 1% by weight of ethylene is polymerized in at least three stages, with a polymer (A) mainly comprising propylene produced in the first step occupying from 60 to 95% by weight of the total polymer, and subsequently in the second step ethylene or a mixture of propylene and not less than 10% by weight of ethylene is polymerized in one or more stages, with a polymer (B) mainly comprising ethylene produced in the second step occupying from 5 to 40% by weight of the total polymer, said ethylene-propylene block copolymer having an ethylene content of from 3 to 20% by weight based on the total polymer, each polymer portion produced in each stage of the first step having such a molecular weight that the melt flow rate (MFR) as measured at 230°C under a load of 2.16 kg satisfies relationship (3):

$$\log \frac{MFR_n}{MFR_{n+1}} \geqq 1.0 \qquad (3)$$

wherein $MFR_n$ is an MFR of a polymer portion produced in the nth stage; and $MFR_{n+1}$ is an MFR of a polymer portion produced in the (n+1)th stage, and the polymer (A) produced in the first step having an isotactic pentad ratio (P) and an MFR satisfying relationship (2), and 0.01 to 1 part by weight of a phosphate compound represented by formula (I).

## DETAILED DESCRIPTION OF THE INVENTION

The propylene homopolymer which can be used in the present invention can be prepared by the process described in Japanese Patent Application (OPI) No. 219207/83. In more detail, the propylene homopolymer can be obtained by homopolymerizing propylene in at least two stages in the presence of a specific catalyst prepared as follows. An organoaluminum compound (i) (e.g., triethylaluminum, diethylaluminum monochloride, etc.) or a reaction product (iv) between the organoaluminum compound (i) and an electron donator (a) (e.g., diisoamyl ether, etc.) is reacted with titanium tetrachloride (c), and the resulting solid product (ii) is then reacted with an electron donator (a) and an electron acceptor (b) (e.g., titanium tetrachloride) to obtain a solid product (iii). The resulting solid product (iii) is combined with an organoaluminum compound (iv) (e.g., triethylaluminum, diethylaluminum monochloride, etc.) and an aromatic carboxylic ester (v) (e.g., methyl p-toluylate, etc.) to prepare a catalyst having an aromatic carboxylic ester to solid product molar ratio [(v)/(iii)] of from 0.1 to 10.0. The term "stage" as used herein means each division of a monomer which is fed either continuously or batchwise.

The process for producing the propylene homopolymer will be illustrated below taking a two-stage production system, the simplest system, for instance.

It is preferable that the amount of the polymer portion produced in the first stage ($S_1$) and that in the second stage ($S_2$) are approximately equal. More specifically, the proportion of each of ($S_1$) and ($S_2$) ranges from 35 to 65% by weight, and preferably from 40 to 60% by weight, based on the total amount of ($S_1$) and ($S_2$). If the production ratio of ($S_1$) and ($S_2$) is out of the above range, the resulting crystalline propylene homopolymer does not have sufficient melt fluidity, and sufficient keading effects during pelletizing cannot be obtained, ultimately resulting in difficulty of obtaining a homogeneous molded article and failing to achieve a satisfactory improvement in melt viscoelasticity.

In the propylene homopolymer according to the present invention, a difference of molecular weight between the individual polymer portions should fall within a specific range as specified by the above-described relationship (1). Therefore, the condition for polymerization is achieved by controlling the concentration of hydrogen in the gas phase.

That is, an intrinsic viscosity (135°C, in a tetralin solution) of the polymer portion having the highest molecular weight, taken as $[\eta]_H$, and that of the polymer portion having the lowest molecular weight, taken as $[\eta]_L$, should satisfy relationship (1). Relationship (1) substantially corresponds to relationship (4):

$$\log HMFR - 0.922 \log MFR \geqq 1.44 \qquad (4)$$

wherein HMFR is a melt flow rate (per 10 minutes) as measured at 230°C under a load of 10.80 kg.

If, in relationship (1), $([\eta]_H - [\eta]_L)$ is less than 3.0, logHMFR in relationship (4) becomes less than (0.922logMFR + 1.44), which means that the resulting crystalline propylene homopolymer has insufficient melt fluidity and that the improvement on melt viscoelasticity attained is not sufficient. Sheets obtained by using such a propylene homopolymer cannot be prevented from sagging during thermoforming. To the contrary, if $([\eta]_H - [\eta]_L)$ is more than 6.5, the molecular weight difference among polymer portions, e.g., between ($S_1$) and ($S_2$), becomes too large, resulting in non-uniformity of molecular weight among the finally obtained propylene homopolymer particles. Molded articles obtained by using such a propylene homopolymer seriously suffer surface roughening.

The thus obtained crystalline propylene homopolymer according to the present invention usually has an MFR between 0.01 g/10 min and 10 g/10 min, and preferably has an MFR between 0.03 g/10 min and 2.0 g/10 min. If its MFR is less than 0.01 g/10 min, the polymer have deteriorated melt fluidity upon pelletizing or molding processing, uneconomically requiring much mechanical power of a pelletizing or molding machine, and also the resulting molded articles lose their commercial values due to significant surface roughening. On the other hand, if it exceeds 10 g/10 min, the molded sheet finds difficulty in thermoforming due to a great sag. Relationship (1) can be understood as a guide to design the process for producing a crystalline propylene homopolymer having a viscoelasticity enough to prevent sagging of a molded sheet obtained therefrom during thermoforming or draw-down of a molding material obtained therefrom during blow molding. Likewise, relationship (4) is to specify melt fluidity of the crystalline propylene homopolymer. The crystalline propylene homopolymer satisfying relationship (1) would satisfy relationship (4).

In the above description with respect to the two-stage polymerization, the intrinsic viscosity is determined at 135°C in a tetralin solution, while that in the second stage $[\eta]_2$ is obtained from equation:

$$[\eta]_T = a[\eta]_1 + b[\eta]_2 = a[\eta]_1 + (1-a)[\eta]_2$$

wherein $[\eta]_1$ is an intrinsic viscosity of the polymer portion produced in the first stage; $[\eta]_T$ is an intrinsic viscosity of the total polymer produced through the first and second stages; and a and b each is a production ratio of the portion produced in the first or second stage, respectively.

$[\eta]_1$ may be $[\eta]_L$ or $[\eta]_H$.

MFR is determined at 230°C under a load of 2.16 kg in accordance with JIS K7210. HMFR is determined at 230°C under a load of 10.80 kg in accordance with JIS K7210.

The ethylene-propylene block copolymer which can be used in the present invention can be prepared by the process proposed by the present inventors as described in Japanese Patent Application No. JP-A-62149711. That is, an organoaluminum compound (vii) (e.g., triethylaluminum, diethylaluminum monochloride, etc.) or a reaction product (xii) between the organoaluminum compound (vii) and an electron doner (d) (e.g., diisoamyl ether) is reacted with titanium tetrachloride (e), and the resulting solid product (viii) is further reacted with an electron doner (d) and an electron acceptor (f) (e.g., titanium tetrachloride) to form a solid product (ix). The resulting solid product (ix) is combined with an organoaluminum compound (x) (e.g., triethylaluminum, diethylaluminum monochloride, etc.) and an aromatic carboxylic acid ester (xi) (e.g., methyl p-toluylate, etc.) to prepare a polymerization catalyst having an aromatic carboxylic ester to solid product molar ratio [(xi)/(ix)] of from 0.1 to 10.0. The ethylene-propylene block copolymer can be prepared by copolymerization in two steps in such a manner that in the first step propylene or a mixture of propylene and up to 1% by weight of ethylene is polymerized in at least three stages in the presence of the above-prepared catalyst, with a polymer (A) mainly comprising propylene produced in the first step occupying from 60 to 95% by weight based on the total polymer and subsequently in the second step ethylene or a mixture of propylene and at least 10% by weight of ethylene in one or more stages, with a polymer (B) mainly comprising ethylene produced in the second step occupying from 5 to 40% by weight based on the total polymer, said block copolymer having an ethylene content of from 3 to 20% by weight based on to total polymer.

The term "stage" as used herein has the same meaning as defined above. The monomer to be polymerized in the first step may further contain butene-1, 4-methylpentene-1, styrene or a non-conjugated diene in addition to up to 1% by weight of ethylene as long as the polymer (A) produced in the first step has a P value falling within the above-specified range. It should be noted, however, that the monomer of the first step solely comprises propylene in order to assure high stiffness and high heat distortion resistance of the ethyelne-propylene block copolymer.

The ratio of the polymer (A) should range from 60 to 95% by weight, and preferably from 75 to 90% by weight, based on the finally obtained ethyelne-propylene block copolymer.

The monomer to be polymerized in the second step comprises from 10 to 100% by weight, and preferably from 20 to 70% by weight, of ethylene. The ratio of the polymer (B) obtained in the second step ranges from 5 to 40% by weight, and preferably from 10 to 25% by weight, based on the finally obtained ethylene-propylene block copolymer.

In the second step, also, the monomer may further contain small amounts of other α-olefins or non-conjugated dienes as in the first step. However, the finally obtained block copolymer excluding a soluble polymer dissolved in a polymerization solvent should have an ethylene content ranging from 3 to 20% by weight based on the total polymer. Therefore, in cases where only propylene is polymerized in the first step at a ratio of 70% by weight based on the total polymer, the polymer (A) obtained in the first step should be block copolymerized with propylene or propylene and other α-olefins from which ethylene has been removed as much as possible at a ratio of from 10 to 27% by weight based on the total polymer so that the finally obtained block copolymer may have an ethylene content between 3% and 20% by weight. In cases where propylene is homopolymerized in the first step at a ratio of 80% by weight based on the total polymer, the second step may be carried out by polymerizing ethylene alone at a ratio of 20% by weight based on the total polymer.

As described above, as long as the limitation of a stage were ethylene can be polymerized and the limitation of an ethylene content of the total polymer are met, the block copolymerization can be carried out by using ethylene either alone or in combination with propylene or other α-olefins through one or more stages.

The ethylene-propylene block copolymer according to the present invention usually has an MFR of from 0.01 to 100 g/10 min, and preferably has an MFR of from 0.03 to 50 g/10 min. In particular uses for sheet molding or blow molding, an MFR of from 0.05 to 10 g/10 min, and preferably from 0.10 to 5.0 g/10 min, is suitable.

The difference in molecular weight among polymer portions produced in three or more stages of the first step, as expressed in terms of MFR, should satisfy the above-described relationship (3). If the value $\log(MFR_n/MFR_{n+1})$ is less than 1.0, high melt viscoelasticity as desired cannot be attained. The upper limit of this value is not particularly restricted, but it would be virtually difficult to make it at least 3.0.

The polymerization ratio of the first step to the second step can be determined by measuring a reaction ratio of ethylene to propylene in the second step and an ethylene content of the total polymer and applying the measured values to a calibration curve which is prepared from previously prepared copolymers having various ethylene/propylene ratios as standard samples by an infrared spectrophotometry.

In confirming relationship (3), the MFR value of each polymer portion produced in the respective stage of the first step is expressed as follows, taking, for instance, a three-stage polymerization system.

$MFR_1$: MFR* of a polymer produced in the 1st stage

$MFR_2$: MFR* of a polymer produced in the 2nd stage

$MFR_3$: MFR* of a polymer produced in the 3rd stage

$MFR_{1+2}$: MFR of a polymer produced though the 1st and 2nd stages

$MFR_{1+2+3}$: MFR of a total polymer produced though the 1st to 3rd stages.

$W_1$: Ratio** of the polymer produced in the 1st stage to the total polymer produced in the first step (1st to 3rd stages)

$W_2$: Ratio** of the polymer produced in the 2nd stage to the total polymer produced in the first step

$W_3$: Ratio** of the polymer produced in the 3rd stage to the total polymer produced in the first step

$$W_1 + W_2 + W_3 = 1.0$$

Note: *: Obtained by sampling and acutual measurements.

**: Determined by measuring a titanium content in the polymer portion by X-ray fluorometry.

$MFR_2$ and $MFR_3$ can be obtained from equations:

$$\log MFR_{1+2} = \frac{W_1}{W_1+W_2}\log MFR_1 + \frac{W_2}{W_1+W_2}\log MFR_2$$

$$\log MFR_{1+2+3} = \frac{W_1+W_2}{W_1+W_2+W_3}\log MFR_{1+2} + \frac{W_3}{W_1+W_2+W_3}\log MFR_3$$

The terminology "isotactic pentad ratio" as used herein means an isotactic ratio in pentad unit of the propylene polymer molecular chain as determined by the method described in Macromolecules, Vol. 6, No. 6, November-December, 925-926 (1973), that is, using $^{13}C$-NMR. In other words, the isotactic pentad ratio means a fraction of propylene monomer units in which five propylene monomer units are connected through an isotactic linkage. Assignment of

spectrum peaks as measured using $^{13}C$-NMR as described above is made by the method described in Macromolecules, Vol. 8, No. 5, September-October, 687-689 (1975). In the examples hereinafter given, integrating measurements using the $^{13}C$-NMR were made 27,000 times by the use of an FT-NMR 270 $MH_z$ apparatus under such a condition that the signal detection limit was increased to 0.001 in terms of isotactic pentad ratio.

In the propylene polymer of the present invention, the relationship between isotactic pentad ratio (P) and melt flow rate (MFR) is specified by relationship (2) with the intention of setting the lower limit of P corresponding to MFR of the propylene polymer to be used because, in general, P decreases as MFR becomes lower in the propylene polymer. Since P is a ratio, its upper limit is 1.00.

The MFR in the above-described relationship is determined at 230°C under a load of 2.16 kg in accordance with JIS K7210, and the above-described ethylene content is determined by infrared spectrophotometry.

In so far as the effects of the present invention are not impaired, the crystalline propylene homopolymer or ethylene-propylene block copolymer which can be used in the present invention may be used in combination with conventional propylene polymers, such as a propylene homopolymer; crystalline random or block copolymers of propylene and one or more of α-olefins, e.g., ethylene, butene-1, pentene-1, 4-methyl-pentene-1, hexene-1, octene-1, and the like; a copolymer of propylene and vinyl acetate, acrylic ester, etc. or saponification products of such a copolymer; a copolymer of propylene and an unsaturated carboxylic acid or an anhydride thereof or a reaction product of such a copolymer and a metal ion compound; a modified propylene polymer obtained by modifying a propylene polymer with an unsaturated carboxylic acid or a derivative thereof; and the like. In addition, the propylene polymer of the present invention can also be used in combination with various synthetic rubbers (e.g., an ethylene-propylene copolymer rubber, an ethylene-propylene-non-conjugated diene copolymer rubber, polybutadiene, polyisoprene, chlorinated polyethylene, chlorinated polypropylene, a styrene-butadiene rubber, a styrene-butadiene-styrene block copolymer, a styrene-isoprene-styrene block copolymer, a styrene-ethylene-butylene-styrene block copolymer, a styrene-propylene-butylene-styrene block copolymer, etc.) or thermoplastic synthetic resins (e.g., polyolefins excluding propylene polymers, such as polyethylene, polybutene, poly-4-methylpentene-1, etc.; polystyrene, a styrene-acrylonitrile copolymer, an acrylonitrile-butadiene-styrene copolymer, polyamide, polyethylene terephthalate, polybutylene terephthalate, polyvinyl chloride, etc.). In the combined use, the mixture comprising the crystalline propylene homopolymer of the present invention should meet relationships (1) and (2), and the mixture comprising the crystalline ethylene-propylene block copolymer of the present invention should meet relationships (2) and (3).

specific examples of the phosphate compound represented by formula (I) which can be compounded into the above-described propylene polymer include sodium 2,2′-methylenebis(4,6-di-t-butylphenyl)phosphate, sodium 2,2′-ethylidenebis(4,6-di-t-butylphenyl)phosphate, lithium 2,2′-methylenebis(4,6-di-t-butylphenyl)phosphate, lithium 2,2′-ethylidenebis(4,6-di-t-butylphenyl)phosphate, sodium 2,2′-ethylidenebis(4-isopropyl-6-t-butylphenyl)phosphate, lithium 2,2′-methylenebis(4-methyl-6-t-butylphenyl)phosphate, lithium 2,2′-methylenebis(4-ethyl-6-t-butylphenyl)phosphate, calcium bis[2,2′-thiobis(4-methyl-6-t-butylphenyl)phosphate], calcium bis[2,2′-thiobis(4-ethyl-6-t-butylphenyl) phosphate], calcium bis[2,2′-thiobis(4,6-di-t-butylphenyl)phosphate], magnesium bis[2,2′-thiobis(4,6-di-t-butylphenyl) phosphate], magnesium bis[2,2′-thiobis(4-t-octylphenyl)phosphate], sodium 2,2′-butylidenebis(4,6-dimethylphenyl) phosphate, sodium 2,2′-butylidenebis(4,6-di-t-butylphenyl)phosphate, sodium 2,2′-t-octylmethylenebis(4,6-dimethylphenyl)phosphate, sodium 2,2′-t-octylmethylenebis(4,6-di-t-butylphenyl)phosphate, calcium bis[2,2′-methylenebis (4,6-di-t-butylphenyl)phosphate], magnesium bis[2,2′-methylenebis(4,6-di-t-butylphenyl)phosphate], barium bis[2,2′-methylenebis(4,6-di-t-butylphenyl)phosphate], sodium 2,2′-methylenebis(4-methyl-6-t-butylphenyl)phosphate, sodium 2,2′-methylenebis(4-ethyl-6-t-butylphenyl)phosphate, sodium (4,4′-dimethyl-6,6′-di-t-butyl-2,2′-biphenyl)phosphate, calcium bis[(4,4′-dimethyl-6,6′-di-t-butyl-2,2′-biphenyl)phosphate], sodium 2,2′-ethylidenebis(4-secbutyl-6-t-butylphenyl)phosphate, sodium 2,2′-methylenebis(4,6-dimethylphenyl)phosphate, sodium 2,2′-methylenebis(4,6-diethylphenyl)phosphate, potassium 2,2′-ethylidenebis(4,6-di-t-butylphenyl)phosphate, calcium bis[2,2′-ethylidenebis (4,6-di-t-butylphenyl)phosphate], magnesium bis[2,2′-ethylidenebis(4,6-di-t-butylphenyl)phosphate], barium bis[2,2′-ethylidenebis(4,6-di-t-butylphenyl)phosphate], aluminum tris[2,2′-methylenebis(4,6-di-t-butylphenyl)phosphate], aluminum tris[2,2′-ethylidenebis(4,6-di-t-butylphenyl)phosphate], and mixtures of two or more thereof, with preferred example being sodium 2,2′-methylenebis(4,6-di-t-butylphenyl)phosphate.

The compounding ratio of the compound of formula (I) in the propylene polymer ranges from 0.01 to 1 part by weight, and preferably from 0.05 to 0.5 part by weight, per 100 parts by weight of the propylene polymer. If it is less than 0.01 part by weight, the effects of improving stiffness and heat distortion resistance cannot be produced sufficiently. Compounding ratios exceeding 1 part by weight are permissive but bring about no further improvement or rather bad economy.

If desired, the propylene polymer composition according to the present invention may further contain various additives commonly compounded into propylene polymers. Such additives include phenol, thioether or phosphorus antioxidants, light stabililzers, clarifiers, nucleating agents, lubricants, antistatic agents, anti-fogging agents, anti-blocking agents, anti-dripping agents, pigment, metal deactivators (copper deactivators), radical generators (e.g., peroxides), dispersants or neutralizing agents (e.g., metallic soaps), inorganic fillers (e.g., talc, mica, clay, wollastonite, zeolite,

asbestos, calcium carbonate, aluminum hydroxide, magnesium hydroxide, silicon dioxide, titanium dioxide, zinc oxide, magnesium oxide, zinc sulfide, barium sulfate, calcium silicate, glass fibers, carbon fibers, carbon black, potassium titanate, metal fibers, etc.), the inorganic fillers having been subjected to surface treatment with coupling agents (e.g., silane-, titanate-, boron-, aluminate- and zircoaluminate-based), and organic fillers (e.g., wood flour, pulp, chip of used paper, synthetic fibers, natural fibers, etc.). Addition of the above-enumerated inorganic fillers, and preferably talc, is effective to further ensure improvements on stiffness and heat distortion resistance of the composition and, therefore, particularly preferred. The amount of talc to be added is from 3.5 to 25 parts by weight, and preferably from 5.0 to 20 parts by weight, per 100 parts by weight of the propylene polymer. The talc to be used preferably has an average particle size of not more than 5 μm.

The propylene polymer composition of the present invention can be obtained by mixing the crystalline propylene homopolymer or crystalline ethylene-propylene block copolymer with prescribed amounts of the phosphate compound of formula (I) and, if desired, other additives by means of usual mixing devices, such as a Henschel mixer (trademark), a super mixer, a ribbon blender, a Banbury mixer, etc., and melt-kneading and pelletizing the resulting mixture at a temperature of from 170°C to 300°C, and preferable from 200°C to 250°C, by means of usual kneading machines, e.g., a single-screw extruder, a twinscrew extruder, Brabender Plastograph, a roll mill, etc. The thus prepared composition can be molded into desired molded articles by various molding techniques, such as injection molding, extrusion molding, blow molding, and the like.- In particular, the composition of the present invention prove markedly effective when used for the production of forming stocks in the form of sheet or blow molded articles.

The phosphate compounds represented by formula (I) per se are well known in the art as serving as nucleating agents to improve stiffness and heat distorsion resistance as disclosed in Japanese Patent Application No. JP-A-581736. It has been turned out, however, that the combination of the compound of formula (I) and the propylene polymer having a specific molecular weight distribution and a specific isotactic pentad ratio (P) as described above, surprisingly produces synergistic effects that can never be anticipated from the conventionally known use as nucleating agent, thus providing polymer compositions having markedly excellent stiffness properties including stiffness and heat distortion resistance.

The compositions in accordance with the present invention are, in comparison with the conventional propylene polymer compoisitions having incorporated therein various nucleating agents, (1) excellent in stiffness and heat distortion resistance, (2) contributive not only to saving of resources due to possibility of reducing a wall thickness of molded articles but to improvement of productivity (molding rate per unit time) owing to possibility of increasing a cooling rate, and (3) suitable for use in wider applications where polystyrene, high-impact polystyrene, an ABS resin, polyester, etc. have hitherto been employed.

The present invention is now illustrated in greater detail with reference to Examples, Comparative Examples, and Preparation Examples, but it should be understood that the present invention is not construed as being limited thereto. In these examples, all the parts and percents are by weight unless otherwise indicated.

Evaluations of various properties were made in examples according to the following test methods.

1. Post-processability of Sheet in Vacuum Forming:

Pellets obtained were molded by extrusion into a sheet of 60 cm wide and 0.4 mm thick and cut to a size of 40 cm × 40 cm. The resulting test specimen was fixed to a clamping frame having a size of 40 cm × 40 cm under tension and placed in a thermostat at 200°C. As the sheet was heated, the central portion thereof began to sag. From a certain point, the sagging portion of the sheet began to return to its original position due to thermal shrinkage. Thereafter, the sheet began to sag again.

(a) The sag (mm) immediately before the sagging sheet started to return to its original position was measured as a maximum sag.
(b) The height (mm) from the lowest to the highest of the position of the sheet resulted from the sagging followed by returning into place was measured as distortion. A maximum return percentage (%) was obtained by dividing the distortion by the maximum sag and multiplying the quotient by 100.
(c) The time period (sec.) required for the sagging sheet once having returned into place to the maximum degree to sag again by 10 mm was measured as retention time.

A sheet having a small maximum sag, a high maximum return percentage, and a long retention time is appreciated as having satisfactory formability (vaccum formability).

2. Stiffness:

Test specimens for measuring Young's modulus and tensile yield strength were prepared by extrusion molding the

pellets obtained into a sheet of 60 cm wide and 0.4 mm thick and cutting the sheet to a prescribed size. Young's modulus and tensile yield strength each was determined on two specimens per sample, one for the machine direction (MD) and the other for transverse direction (TD), in accordance with ASTM D 882, and the measured values were averaged. The higher the Young's modulus and tensile yield strength, the higher the stiffness.

3. Heat Distortion Resistance:

Pellets were injection molded to prepare specimens of 130 mm long, 13 mm wide, and 6.5 mm thick. A heat distortion temperature of the test specimen was determined in accordance with JIS K7207 (load: 4.6 kgf/$cm^2$) to evaluate high distortion resistance. The higher the heat distortion temperature, the higher the heat distortion resistance.

4. Impact Resistance:

Pellets were extrusion molded into a sheet of 60 cm wide and 0.4 mm thick, and the sheet was cut to prepare a specimen having a prescribed size. A punching impact strength of the test specimen was determined in accordance with ASTM D 781 to evaluate impact resistance. The higher the punching impact strength, the higher the impact resistance.

PREPARATION EXAMPLES 1 TO 3

Preparation of Crystalline Propylene Homopolymer

1) Preparation of Catalyst:

n-Hexane (600 ml), 0.50 mol of diethylaluminum monochloride (DEAC), and 1.20 mol of diisoamyl ether were mixed at 25°C for 1 minute, and the mixture was allowed to react at that temperature for 5 minutes to obtain reaction mixture (vi) (diisoamyl ether/DEAC molar ratio = 2.4). In a reactor whose atmosphere had been replaced with nitrogen was put 4.0 mol of titanium tetrachloride and heated to 35°C. The whole amount of the reaction mixture (vi) was added thereto dropwise over a period of 180 minutes. The mixture was kept at 35°C for 30 minutes and then heated up to 75°C at which the reaction was further continued for an additional 1 hour. After cooling to room temperature (20°C), the supernatant liquor was removed, and 4000 ml of n-hexane was added to the residue, followed by decantation to remove the supernatant. The addition of n-hexane and the subsequent decantation were repeated four times to obtain 190 g of a solid product (ii). The whole amount of the solid product (ii) was suspended in 3000 ml of n-hexane, and to the suspension were added 160 g of diisoamyl ether at 20°C and then 350 g of titanium tetrachloride at room temperature over a period of about 1 minute, followed by allowing the mixture to react at 65°C for 1 hour. After completion of the reaction, the reaction mixture was cooled to room temperature, and the supernatant liquor was removed by decantation. To the residue was added 4000 ml of n-hexane, the mixture stirred for 10 minutes followed by allowing to stand, and the supernatant removed by decantation. The addition of n-hexane and the decantation were repeated five times, and the final residue was dried under reduced pressure to obtain a solid product (iii).

2) Preparation of Preactivated Catalyst:

In a 20 ℓ-volume stainless steel-made reactor equipped with tilted wings whose atmosphere had been displaced with nitrogen gas were added 15 ℓ of n-hexane, 42 g of DEAC, and 30 g of the solid product (iii) prepared in 1) above at room temperature, and 15 Nℓ of hydrogen was introduced therein, followed by reacting for 5 minutes at a propylene partial pressure of 5 kg/$cm^2$G. The unreacted propylene, hydrogen, and n-hexane were removed under reduced pressure to obtain a preactivated catalyst (vii) as a powder [propylene reaction weight: 82.0 g per gram of the solid product (iii)].

3) Homopoymerization of Propylene:

In a 50 ℓ-volume polymerization vessel whose atmosphere had been replaced with nitrogen gas were charged 20 ℓ of dried n-hexane, 8 g of DEAC, 2 g of the above-obtained preactivated catalyst (vii), and 2.2 g of methyl p-toluylate, and hydrogen was introduced therein, followed by maintaining the system at 70°C. Propylene was then fed to the vessel, and polymerization of a first stage was carried out at 70°C under a pressure of 10 kg/$cm^2$G with the hydrogen concentration in the gas phase being adjusted to 11 mol% (Preparation Example 1), 5 mol% (Preparation Example 2) or 14 mol% (Preparation Example 3). When the amount of the produced polymer reached 3 kg, the propylene feed was stopped. After cooling the reaction system to room temperature, hydrogen and the unreacted propylene were

driven out of the reaction vessel. A part of the polymerization slurry was withdrawn and determined for $[\eta]_1$, and a titanium content was determined by X-ray fluorometry to obtain a polymer yield per unit weight of the catalyst.

The inner temperature of the polymerization vessel was again heated up to 70°C to effect polymerization of a second stage under a polymerization pressure of 10 kg/cm$^2$G with the hydrogen concentration in the gas phase being adjusted to 0.4 mol% (Preparation Example 1), 0.07 mol% (Preparation Example 2) or 0.08 mol% (Preparation Example 3). When the amount of the polymer produced in the second stage reached 3 kg, the propylene feed was stopped. After cooling to room temperature, hydrogen and the unreacted propylene were released out of the system. A part of the polymerization slurry was withdrawn to determine $[\eta]_T$ and titanium content in the polymer by X-ray fluorometry to obtain a polymer yield per unit weight of the catalyst.

A weight ratio of the polymer produced in the first stage to that produced in the second stage was calculated, and the intrinsic viscosity of the polymer portion produced in the second stage $[\eta]_2$ was obtained through calculation.

To the resulting polymerization slurry was added 5 ℓ of methanol, followed by stirring at 90°C for 30 minutes. Then, 40 ml of a 20 % aqueous solution of sodium hydroxide was added thereto, followed by stirring for 20 minutes. After cooling to room temperature, the reaction slurry was washed three times with 5 ℓ portions of water and filtered. The filtrate was dried to obtain a white polymer powder. The resulting propylene homopolymer was designated as Polymer A, B, or C, respectively. The analytical results of Polymers A, B, and C are shown in Table 1, wherein $[\eta]_L$ is $[\eta]_1$, and $[\eta]_H$ is $[\eta]_2$.

TABLE 1

| | Preparation Example 1 | Preparation Example 2 | Preparation Example 3 |
|---|---|---|---|
| 1st Stage : | | | |
| $[\eta]_1$ (dl/g) | 1.95 | 2.10 | 1.15 |
| Polymerization Ratio (wt %) | 47 | 49 | 53 |
| 2nd Stage : | | | |
| $[\eta]_2$ (dl/g) | 5.10 | 5.96 | 5.87 |
| Polymerization Ratio (wt %) | 53 | 51 | 47 |
| Total Polymer : | Polymer A | Polymer B | Polymer C |
| P | 0.967 | 0.962 | 0.969 |
| MFR (g/10 min) | 0.44 | 0.28 | 0.62 |
| HMFR (g/10 min) | 13.5 | 11.2 | 22.4 |
| logHMFR - 0.922log MFR | 1.46 | 1.56 | 1.54 |
| $[\eta]_T$ (dl/g) | 3.62 | 4.07 | 3.37 |
| $[\eta]_H$-$[\eta]_L$ (dl/g) | 3.15 | 3.86 | 4.72 |

PREPARATION EXAMPLES 4 TO 6

Preparation of Crystalline Ethylene-Propylene Block Copolymer

1) Preparation of Catalyst:

n-Hexane (6 ℓ), 5.0 mol of DEAC, and 12.0 mol of diisoamyl ether were mixed at 25°C for 5 minutes, followed by allowing the mixture to react at that temperature for 5 minutes to obtain a reaction mixture (vi) (diisoamyl ether/DEAC molar ratio = 2.4). In a reactor whose atmosphere had been replaced with nitrogen was charged 40 mol of titanium tetrachloride, followed by heating to 35°C. The whole amount of the reaction mixture (vi) was added thereto dropwise over a period of 3 hours, kept at the same temperature for 30 minutes, and heated up to 75°C at which the reaction was continued for an additional one hour. After cooling to room temperature (20°C), the supernatant liquor was removed. To the residue was added 30 ℓ of n-hexane, followed by decantation to remove the supernatant. The addition of n-hexane and the decantation were repeated four times to obtain 1.9 kg of a solid product (ii). The whole amount of the solid product (ii) was suspended in 30 ℓ of n-hexane, and to the suspension were added 1.6 kg of diisoamyl ether at 20 °C and then 3.5 kg of titanium tetrachloride at room temperature over a period of about 5 minutes, followed by allowing the mixture to react at 65°C for 1 hour. After completion of the reaction, the reaction mixture was cooled to room temperature, and the supernatant liquor was removed by decantation. To the residue was added 30 ℓ of n-hexane, the mixture stirred for 15 minutes followed by allowing to stand, and the supernatant liquor removed. The addition of n-hexane and removal of the supernatant liquor were repeated 5 times, and the final residue was dried

under reduced pressure to obtain a solid product (iii).

2) Preactivation of Catalyst:

In a 50 ℓ-volume vessel were charged 40 ℓ of n-hexane, 850 g of DEAC, 360 g of the solid product (iii) obtained in 1) above, and 3.8 g of methyl p-toluylate, and 180 g/hr of propylene gas was fed thereto for 2 hours while stirring at 30°C to effect preactivation of the catalyst.

3) Preparation of Ethylene-Propylene Block Copolymer:

First Stage:

In a 150 ℓ-volume first polymerization vessel were continuously fed 26 ℓ/hr of n-hexane, 240 ml/hr (Preparation Examples 4 and 5) or 120 ml/hr (Preparation Example 6) of the preactivated catalyst slurry as prepared in 2) above, and methyl p-toluylate in an amount of 1 g per gram of the solid product (iii) in the catalyst slurry. Propylene was fed to the first to third polymerization vessels each having a volume of 150 ℓ to perform polymerization under temperature and pressure conditions shown in Table 2 below, wherein the 1st, 2nd, and 3rd stages of the first step correspond to the polymerization reactions in the 1st, 2nd, and 3rd polymerization vessels, respectively.

In Preparation Example 4, when propylene was fed in such a manner that the gas phase in the 1st vessel had a hydrogen concentration of 5.9 mol%, the hydrogen concentration in the 2nd and 3rd vessels were found to be 0.65 mol% and 0.069 mol%, respectively. In Preparation Example 5, when propylene was fed so that the hydrogen concentration of the gas phase in the 1st vessel became 14.5 mol%, those in the 2nd and 3rd vessels were found to be 1.0 mol% and 0.10 mol%, respectively. In preparation Example 6, when propylene was fed so that the hydrogen concentration of the gas phase in the 1st vessel became 2.1 mol%, those in the 2nd and 3rd vessels were found to be 0.41 mol% and 0.046 mol%, respectively. The polymerization ratio and MFR of the 1st to 3rd stage were as shown in Table 2. During the polymerization, the liquid levels in the 1st to 3rd vessels were controlled to 80 vol% by means of a control valve.

Second Step:

The slurry containing polymer particles withdrawn from the 3rd polymerization vessel was degassed in a vacuum chamber at 60°C and 0.5 kg/cm$^2$G and then forwarded to a 150 ℓ-volume 4th polymerization vessel by means of a pump. Ethylene was then fed to the 4th vessel at a feed rate of 600 g/hr at 60°C while controlling the hydrogen concentration of the gas phase at 10 mol%, and propylene and hydrogen were fed so that the gas phase had an ethylene ratio of 0.40 based on the total of ethylene and propylene to continue polymerization reaction. The polymer slurry withdrawn from the 4th vessel was forwarded to a degassing chamber and, after deactivation of the catalyst with methanol, neutralized with a 20 % sodium hydroxide aqueous solution, washed with water, separated, and dried to obtain an ethylene-propylene block copolymer as a white powder in a yield of about 6.5 kg/hr. The resulting block copolymer was designated as Polymer D, E, or F, respectively. The analytical results of Polymers D to F as well as those of the polymer portions produced in the 1st and 2nd step are shown in Table 2.

TABLE 2

| | Preparation Example 4 | Preparation Example 5 | Preparation Example 6 |
|---|---|---|---|
| First Step: | | | |
| First Stage: | | | |
| Temperature (°C) | 70 | 70 | 70 |
| Pressure ($kg/cm^2G$) | 6 | 4 | 6 |
| Gas Phase $H_2$ Concn. (mol%) | 5.9 | 14.5 | 2.1 |
| $MFR_1$ (g/10 min) | 14.8 | 62.0 | 7.5 |
| $W_1$ (wt%) | 33 | 32 | 35 |
| Second Stage: | | | |
| Temperature (°C) | 70 | 60 | 70 |
| Pressure ($kg/cm^2G$) | 8 | 8 | 8 |
| Gas Phase $H_2$ Concn. (mol%) | 0.65 | 1.0 | 0.41 |
| $MFR_2$ (g/10 min) | 0.55 | 0.45 | 0.45 |
| $W_2$ (wt%) | 34 | 34 | 33 |
| Third Stage: | | | |
| Temperature (°C) | 70 | 50 | 70 |
| Pressure ($kg/cm^2G$) | 10 | 12 | 10 |
| Gas Phase $H_2$ Concn. (mol%) | 0.069 | 0.10 | 0.046 |
| $MFR_3$ (g/10 min) | 0.009 | 0.006 | 0.015 |
| $W_3$ (wt%) | 33 | 34 | 32 |
| $logMFR_1/MFR_2$ | 1.4 | 2.1 | 1.3 |
| $logMFR_2/MFR_3$ | 1.8 | 1.9 | 1.4 |
| P | 0.976 | 0.980 | 0.975 |
| $MFR_{1+2+3}$ (g/10 min) | 0.42 | 0.50 | 0.41 |

TABLE 2 (cont'd)

| Second Step: | Preparation Example 4 | Preparation Example 5 | Preparation Example 6 |
|---|---|---|---|
| Gas Phase $H_2$ Concn. (mol%) | 10 | 10 | 10 |
| MFR (g/10 min) | 0.10 | 0.12 | 0.16 |
| $RCC_2^=$ * (wt%) | 64 | 64 | 64 |
| W** (wt%) | 13.4 | 13.3 | 13.5 |
| Total Polymer: | Polymer D | Polymer E | Polymer F |
| MFR (g/10 min) | 0.37 | 0.38 | 0.35 |
| $TC_2^=$ *** (wt%) | 8.6 | 8.5 | 8.7 |

Note: *: Ethylene content in the polymer portion produced in the second step.

**: Proportion of the polymer portion produced in the second step in the total polymer.

***: Ethylene content in the total polymer.

EXAMPLES 1 TO 3 AND COMPARATIVE EXAMPLES 1 TO 6

To 100 parts of each of Polymers A, B, and C obtained in Preparation Examples 1 to 3 were added sodium 2,2′-methylenebis(4,6-di-t-butylphenyl)phosphate as a nucleating agent and other additives in the proportions shown in Table 3, and the mixture was stirred in a Henschel mixer (trademark) for 3 minutes and melt-kneaded in a single-screw extruder (diameter: 40 mm) at 200°C to obtain pellets. For comparison, pellets were prepared in the same manner as described above, except for excluding the nucleating agent as used above (Comparative Examples 1 to 3), or using Polymer A and replacing the nucleating agent as used above with other nucleating agent as shown in Table 3 (Comparative Examples 4 to 6).

Post-processability of sheet, stiffness, and heat distortion resistance of the resulting polymer compositions were evaluated in accordance with the above-described test methods. Sheet specimens for evaluating post-processability and stiffness were prepared by extrusion molding the pellets at a resin temperature of 250°C. Specimens for evaluating heat distortion resistance were prepared by injection molding the pellets at a resin temperature of 250°C and a mold temperature of 50°C. The results obtained are shown in Table 3.

EXAMPLES 4 TO 6 AND COMPARATIVE EXAMPLES 7 TO 12

To 100 parts of each of Polymers A, B, and C prepared in Preparation Examples 1 to 3 were added sodium 2,2′-methylenebis(4,6-di-t-butylphenyl)phosphate as a nucleating agent, a fine talc powder having an average particle size of from 2 to 3 μm as an inorganic filler, and other additives in the proportion shown in Table 4, and the mixture was stirred in a Henschel mixer (trademark) for 3 minutes and melt-kneaded in a single-screw extruder (diameter: 40 mm) at 200°C to obtain pellets. For comparison, pellets were obtained in the same manner as described above, except for excluding the nucleating agent as used above (Comparative Examples 7 to 9), or using Polymer A and replacing the nucleating agent as used above with other nucleating agent as shown Table 4 (Comparative Examples 10 to 12).

The resulting pellets were extrusion molded at a resin temperature of 250°C into a sheet for evaluation of post-processability and stiffness. Further, the pellets were injection molded at a resin temperature of 250°C and a mold temperature of 50°C to prepare specimens for heat distortion testing. Post-processability of sheet, stiffness, and heat distortion resistance of the resulting polymer compositions were evaluated in accordance with the above-described test methods using the thus prepared sheets or specimens, and the results obtained are shown in Table 4.

EXAMPLES 7 TO 9 AND COMPARATIVE EXAMPLES 13 TO 18

To 100 parts of each of Polymers D, E, and F prepared in Preparation Examples 4 to 6 were added sodium 2,2′-methylenebis(4,6-di-t-butylphenyl)phosphate as nucleating agent and other additives in the proportions shown in Table 5, and the mixture was stirred in a Henschel mixer for 3 minutes and then melt-kneaded at 200°C in a single-screw extruder (diameter: 40 mm) to obtain pellets. For comparison, pellets were prepared in the same manner as described above, except for excluding the nucleating agent (Comparative Examples 13 to 15), or using Polymer D and replacing the nucleating agent as used above with other nucleating agent as shown in Table 5 (Comparative Examples 16 to 18).

The pellets were extrusion molded at a resin temperature of 250°C to prepare a sheet for evaluating post-processability, stiffness, and impact resistance. Further, the pellets were injection molded at a resin temperature of 250°C and a mold temperature of 50°C to prepare a specimen for heat distortion testing. Using the resulting sheets or specimens, post-processability of sheet, stiffness, heat distortion resistance, and impact resistance were evaluated in accordance with the above-described test methods. The results obtained are shown in Table 5 below.

EXAMPLES 10 TO 12 AND COMPARATIVE EXAMPLES 10 TO 24

To 100 parts of each of Polymers D, E, and F prepared in Preparation Examples 4 to 6 were added sodium 2,2′-methylenebis(4,6-di-t-butylphenyl)phosphate as nucleating agent, a fine talc powder having an average particle size of from 2 to 3 μm as inorganic filler, and other additives in the proportions as shown in table 6, and the mixture was stirred in a Henschel mixer for 3 minutes and then melt-kneaded in a single-screw extruder (diameter: 40 mm) at 200°C to obtain pellets. For comparison, pellets were obtained in the same manner as described above, except for excluding the nucleating agent (Comparative Examples 19 to 21), or using Polymer D and replacing the nucleating agent as used above with other nucleating agent as shown in Table 6 (Comparative Examples 22 to 24).

The pellets were extrusion molded at a resin temperature of 250°C to prepare a sheet for evaluating post-processability, stiffness, and impact resistance. Further, the pellets were injection molded at a resin temperature of 250°C and a mold temperature of 50°C to prepare a specimen for evaluating heat distortion resistance. Using the resulting sheets or specimens, post-processability of sheet, stiffness, heat distortion resistance, and impact resistance of the polymer compositions were evaluated in accordance with the above-described test methods. The results obtained are shown in Table 6.

In Tables 3 through 6, the compound and additives used in the propylene polymer compositions are as follows.

| | |
|---|---|
| Compound (I): | Sodium 2,2′-methylenebis(4,6-di-t-butyl-phenyl)phosphate ("MARK NA-11″ produced by Adeka Argus Chemical Co., Ltd.) |
| Nucleating Agent 1: | Aluminum p-t-butylbenzoate |
| Nucleating Agent 2: | 1·3,2·4-Dibenzylidene sorbitol |
| Nucleating Agent 3: | Sodium bis(4-t-butylphenyl)phosphate |
| Phenolic Antioxidant 1: | 2,6-di-t-butyl-p-cresol |
| Phenolic Antioxidant 2: | Tetrakis[methylene-3-(3′,5′-di-t-butyl-4′-hydroxyphenyl)propionate]methane |
| Phosphorus Antioxidant 1: | Tetrakis(2,4-di-t-butylphenyl)-4,4′-biphenylene-diphosphonite |
| Phosphorous Antioxidant 2: | Bis(2,4-di-t-butylphenyl)pentaerythritol-diphosphite |
| Ca-St: | Calcium stearate |
| Inorganic Filler: | Talc (average particle size: 2 to 3 μm) |

TABLE 3

| Composition (part by weight)*: | Example No. 1 | Example No. 2 | Example No. 3 | Comparative Example No. 1 | Comparative Example No. 2 | Comparative Example No. 3 | Comparative Example No. 4 | Comparative Example No. 5 | Comparative Example No. 6 |
|---|---|---|---|---|---|---|---|---|---|
| Polymer | A | B | C | A | B | C | A | A | A |
| Compound (I) | 0.1 | 0.1 | 0.1 | | | | | | |
| Nucleating Agent 1 | | | | | | | 0.1 | | |
| Nucleating Agent 2 | | | | | | | | 0.1 | |
| Nucleating Agent 3 | | | | | | | | | 0.1 |
| Phenolic Antioxidant 2 | 0.05 | 0.05 | 0.05 | 0.05 | 0.05 | 0.05 | 0.05 | 0.05 | 0.05 |
| Phosphorus Antioxidant 1 | 0.05 | 0.05 | 0.05 | 0.05 | 0.05 | 0.05 | 0.05 | 0.05 | 0.05 |
| Ca-St | 0.1 | 0.1 | 0.1 | 0.1 | 0.1 | 0.1 | 0.1 | 0.1 | 0.1 |
| Post-processability of Sheet: | | | | | | | | | |
| Sag (mm) | 32 | 30 | 29 | 35 | 33 | 31 | 31 | 34 | 33 |
| Return (%) | 86 | 88 | 86 | 82 | 85 | 83 | 85 | 82 | 85 |
| Retention Time (sec) | 23 | 28 | 25 | 18 | 24 | 21 | 22 | 19 | 22 |
| Young's Modulus ($kgf/mm^2$) | 148 | 144 | 148 | 141 | 138 | 142 | 143 | 141 | 145 |
| Tensile Yield Strength ($kgf/mm^2$) | 4.90 | 4.83 | 4.96 | 4.62 | 4.54 | 4.70 | 4.75 | 4.68 | 4.79 |
| Heat Distortion Temperature (°C) | 145 | 143 | 146 | 120 | 118 | 121 | 132 | 129 | 141 |

Note: *: Per 100 parts by weight of the polymer.

TABLE 4

| | Example No. | | | Comparative Example No. | | | | | |
|---|---|---|---|---|---|---|---|---|---|
| Composition (part by weight)*: | 4 | 5 | 6 | 7 | 8 | 9 | 10 | 11 | 12 |
| Polymer | A | B | C | A | B | C | A | A | A |
| Compound (I) | 0.1 | 0.1 | 0.1 | | | | | | |
| Nucleating Agent 1 | | | | | | | 0.1 | | |
| Nucleating Agent 2 | | | | | | | | 0.1 | |
| Nucleating Agent 3 | | | | | | | | | 0.1 |
| Phenolic Antioxidant 1 | 0.1 | 0.1 | 0.1 | 0.1 | 0.1 | 0.1 | 0.1 | 0.1 | 0.1 |
| Phenolic Antioxidant 2 | 0.05 | 0.05 | 0.05 | 0.05 | 0.05 | 0.05 | 0.05 | 0.05 | 0.05 |
| Phosphorus Antioxidant 2 | 0.05 | 0.05 | 0.05 | 0.05 | 0.05 | 0.05 | 0.05 | 0.05 | 0.05 |
| Ca-St | 0.1 | 0.1 | 0.1 | 0.1 | 0.1 | 0.1 | 0.1 | 0.1 | 0.1 |
| Inorganic Filler | 10 | 10 | 10 | 10 | 10 | 10 | 10 | 10 | 10 |
| Post-processability of Sheet: | | | | | | | | | |
| Sag (mm) | 33 | 31 | 30 | 36 | 34 | 32 | 32 | 35 | 34 |
| Return (%) | 77 | 79 | 77 | 74 | 77 | 75 | 77 | 74 | 77 |
| Retention Time (sec) | 21 | 25 | 23 | 16 | 22 | 19 | 20 | 17 | 20 |
| Young's Modulus ($kgf/mm^2$) | 203 | 197 | 203 | 193 | 189 | 194 | 193 | 190 | 198 |
| Tensile Yield Strength ($kgf/mm^2$) | 6.72 | 6.62 | 6.79 | 6.33 | 6.21 | 6.44 | 6.51 | 6.41 | 6.56 |
| Heat Distortion Temperature (°C) | 156 | 154 | 156 | 132 | 129 | 131 | 142 | 140 | 150 |

Note: *: Per 100 parts by weight of the polymer.

TABLE 5

| Composition (part by weight)*: | Example No. 7 | 8 | 9 | Comparative Example No. 13 | 14 | 15 | 16 | 17 | 18 |
|---|---|---|---|---|---|---|---|---|---|
| Polymer | D | E | F | D | E | F | D | D | D |
| Compound (I) | 0.1 | 0.1 | 0.1 | | | | | | |
| Nucleating Agent 1 | | | | | | | 0.1 | | |
| Nucleating Agent 2 | | | | | | | | 0.1 | |
| Nucleating Agent 3 | | | | | | | | | 0.1 |
| Phenolic Antioxidant 2 | 0.05 | 0.05 | 0.05 | 0.05 | 0.05 | 0.05 | 0.05 | 0.05 | 0.05 |
| Phosphorus Antioxidant 1 | 0.05 | 0.05 | 0.05 | 0.05 | 0.05 | 0.05 | 0.05 | 0.05 | 0.05 |
| Ca-St | 0.1 | 0.1 | 0.1 | 0.1 | 0.1 | 0.1 | 0.1 | 0.1 | 0.1 |
| Post-processability of Sheet: | | | | | | | | | |
| Sag (mm) | 25 | 25 | 27 | 20 | 19 | 21 | 23 | 21 | 24 |
| Return (%) | 100 | 100 | 100 | 100 | 100 | 100 | 100 | 100 | 100 |
| Retention Time (sec) | 42 | 44 | 37 | 38 | 40 | 33 | 40 | 39 | 40 |
| Young's Modulus ($kgf/mm^2$) | 134 | 136 | 135 | 118 | 121 | 118 | 123 | 120 | 125 |
| Tensile Yield Strength ($kgf/mm^2$) | 4.22 | 4.30 | 4.25 | 3.87 | 3.96 | 3.89 | 4.03 | 3.92 | 4.10 |
| Heat Distortion Temperature (°C) | 126 | 129 | 127 | 123 | 105 | 103 | 115 | 111 | 120 |
| Punching Impact Strength at -20°C ($kgf/mm^2$) | 15 | 14 | 16 | 12 | 12 | 11 | 12 | 13 | 13 |

Note: *: Per 100 parts by weight of the polymer.

TABLE 6

| | Example No. | | | Comparative Example No. | | | | | |
|---|---|---|---|---|---|---|---|---|---|
| | 10 | 11 | 12 | 19 | 20 | 21 | 22 | 23 | 24 |
| Composition (part by weight)*: | | | | | | | | | |
| Polymer | D | E | F | D | E | F | D | D | D |
| Compound (I) | 0.1 | 0.1 | 0.1 | | | | | | |
| Nucleating Agent 1 | | | | | | | 0.1 | | |
| Nucleating Agent 2 | | | | | | | | 0.1 | |
| Nucleating Agent 3 | | | | | | | | | 0.1 |
| Phenolic Antioxidant 1 | 0.1 | 0.1 | 0.1 | 0.1 | 0.1 | 0.1 | 0.1 | 0.1 | 0.1 |
| Phenolic Antioxidant 2 | 0.05 | 0.05 | 0.05 | 0.05 | 0.05 | 0.05 | 0.05 | 0.05 | 0.05 |
| Phosphorus Antioxidant 2 | 0.05 | 0.05 | 0.05 | 0.05 | 0.05 | 0.05 | 0.05 | 0.05 | 0.05 |
| Ca-St | 0.1 | 0.1 | 0.1 | 0.1 | 0.1 | 0.1 | 0.1 | 0.1 | 0.1 |
| Inorganic Filler | 10 | 10 | 10 | 10 | 10 | 10 | 10 | 10 | 10 |
| Post-processability of Sheet: | | | | | | | | | |
| Sag (mm) | 26 | 25 | 27 | 21 | 20 | 22 | 24 | 22 | 25 |
| Return (%) | 100 | 100 | 100 | 100 | 100 | 100 | 100 | 100 | 100 |
| Retention Time (sec) | 38 | 40 | 33 | 34 | 36 | 29 | 36 | 35 | 36 |
| Young's Modulus ($kgf/mm^2$) | 184 | 187 | 186 | 162 | 166 | 162 | 169 | 165 | 171 |
| Tensile Yield Strength ($kgf/mm^2$) | 5.80 | 5.92 | 5.84 | 5.32 | 5.44 | 5.35 | 5.54 | 5.39 | 5.64 |
| Heat Distortion Temperature (°C) | 140 | 144 | 141 | 116 | 119 | 117 | 128 | 125 | 133 |
| Punching Impact Strength at -20°C ($kgf/mm^2$) | 14 | 13 | 15 | 11 | 11 | 10 | 12 | 12 | 12 |

Note: *: Per 100 parts by weight of the polymer.

The propylene polymer compositions of Examples 1 to 3 and 7 to 9 comprise the crystalline propylene homopolymer (Examples 1 to 3) or crystalline ethylene-propylene block copolymer (Examples 7 to 9) whose molecular weight distribution and isotactic pentad ratio fall within the respective range as specified by the present invention and the phosphate compound represented by formula (I), while those of Comparative Examples 1 to 3 and 13 to 15 have the same compositions as those of Examples 1 to 3 and 7 to 9, respectively, except for containing no organic nucleating agent.

It can be seen from Tables 3 and 5 that the sheets obtained from the compositions of Examples 1 to 3 and Comparative Examples 1 to 3 exhibit substantially equal post-processability of a sheet, whereas the effects on improving stiffness and heat distortion resistance attained in Comparative Examples 1 to 3 are not still sufficient. The similar considerations can be derived by comparing Examples 7 to 9 with Comparative Examples 13 to 15.

In Comparative Examples 4 to 6 or Comparative Examples 16 to 18, an organic nucleating agent other than the phosphate compound of formula (I) according to the present invention was respectively incorporated into each of the compositions of Comparative Example 1 and Comparative Example 13 in order to improve stiffness and heat distortion resistance. As compared with the compositions of Examples 1 to 3 or Examples 7 to 9, stiffness and heat distortion resistance of the compositions of Comparative Examples 4 to 6 or Comparative Examples 16 to 18, respectively, are still unsatisfactory, although considerably improved over the compositions of Comparative Examples 1 to 3 or Comparative Examples 13 to 15, respectively.

It was also confirmed that the compositions of Examples 7 to 9 accomplished an improvement of stiffness without suffering deterioration in impact resistance, sufficiently standing comparison with Comparative Examples 16 to 18.

Thus, the propylene polymer compositions according to the present invention proved markedly excellent in stiffness and heat distortion resistance due to significant synergistic effects produced by the combination of the phosphate compound of formula (I) and the crystalline propylene polymers having a specific molecular weight distribution and a specific isotactic pentad ratio.

The same effects as in Examples 1 to 3 and 7 to 9 can also be observed in Examples 4 to 6 and 10 to 12 in which the corresponding propylene polymer composition further contains talc as inorganic filler.

As described above, the propylene polymer compositions according to the present invention are greatly superior in post-processability of sheet, stiffness, and heat distortion resistance as compared with the conventional compositions comprising a crystalline propylene homopolymer or crystalline ethylene-propylene block copolymer and a known nucleating agent.

## Claims

1. A high stiffness propylene polymer composition comprising 100 parts by weight of a crystalline propylene homopolymer obtained by polymerizing propylene in at least two stages in such a manner that from 35 to 65% by weight of the total polymer is produced in the first stage and from 35 to 65% by weight of the total polymer is produced in the second and subsequent stages, the polymer portions produced in the respective stages having an intrinsic viscosity [η] which satisfies relationship (1):

$$3.0 \leqq [\eta]_H - [\eta]_L \leqq 6.5 \quad (1)$$

wherein $[\eta]_H$ is an intrinsic viscosity of a polymer portion having the highest molecular weight; and $[\eta]_L$ is an intrinsic viscosity of a polymer portion having the lowest molecular weight,
and the isotactic pentad ratio (P) of the total polymer and the melt flow rate (MFR) of the total polymer as measured at 230°C under a load of 2.16 kg which satisfy a relationship (2):

$$1.00 \geqq P \geqq 0.015 \log MFR + 0.955 \quad (2)$$

and from 0.01 to 1 part by weight of a phosphate compound represented by formula (I):

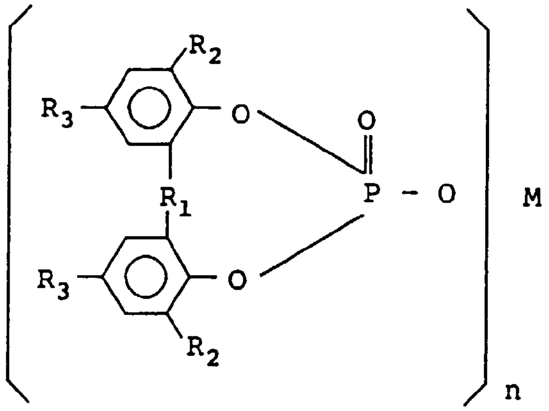

(I)

wherein $R_1$ represents a single bond, a sulfur atom or an alkylidene group having from 1 to 4 carbon atoms; $R_2$ and $R_3$, which may be the same or different, each represents a hydrogen atom or an alkyl group having from 1 to 8 carbon atoms; M represents a mono- to trivalent metal atom; and n represents an integer of from 1 to 3.

**2.** A high stiffness propylene polymer composition as claimed in claim 1, wherein said crystalline propylene homopolymer has a melt flow rate of from 0.01 to 10 g/10 min.

**3.** A high stiffness propylene polymer composition as claimed in claim 1, wherein said crystalline propylene homopolymer has a melt flow rate of from 0.03 to 2.0 g/10 min.

**4.** A high stiffness propylene polymer composition as claimed in claim 1, wherein said crystalline propylene homopolymer has a high melt flow rate (HMFR) as measured at 230°C under a load of 10.80 kg and a melt flow rate (MFR) which satisfy relationship of (4):

$$\log HMFR - 0.922 \log MFR \geqq 1.44 \quad (4)$$

**5.** A high stiffness propylene polymer composition as claimed in claim 1, wherein said phosphate compound is sodium 2,2′-methylenebis(4,6-di-t-butylphenyl)phosphate.

**6.** A high stiffness propylene polymer composition as claimed in claim 1, wherein said composition further comprises an inorganic filler.

**7.** A high stiffness propylene polymer composition as claimed in claim 6, wherein said inorganic filler is talc.

**8.** A high stiffness propylene polymer composition as claimed in claim 7, wherein said talc is present in an amount of from 3.5 to 25 parts by weight per 100 parts by weight of the crystalline propylene homopolymer.

**9.** A high stiffness propylene polymer composition as claimed in claim 7, wherein said talc is present in an amount of from 5.0 to 20 parts by weight per 100 parts by weight of the crystalline propylene homopolymer.

**10.** A high stiffness propylene polymer composition as claimed in claim 7, wherein said talc has an average particle size of not more than 5 μm.

**11.** A high stiffness propylene polymer composition comprising 100 parts by weight of a crystalline ethylene-propylene block copolymer obtained by copolymerization in two steps in such a manner that in the first step propylene or a mixture of propylene and not more than 1% by weight of ethylene is polymerized in at least three stages, with a polymer (A) mainly comprising propylene produced in the first step occupying from 60 to 95% by weight of the total polymer, and subsequently in the second step ethylene or a mixture of propylene and not less than 10% by weight of ethylene is polymerized in one or more stages, with a polymer (B) mainly comprising ethylene produced in the second step occupying from 5 to 40% by weight of the total polymer, said ethylene-propylene block copolymer having an ethylene content of from 3 to 20% by weight based on the total polymer, each polymer portion produced

in each stage of the first step having such a molecular weight that the melt flow rate (MFR) as measured at 230°C under a load of 2.16 kg satisfies relationship (3):

$$\log \frac{MFR_n}{MFR_{n+1}} \geqq 1.0 \qquad (3)$$

wherein $MFR_n$ is an MFR of a polymer portion produced in the nth stage; and $MFR_{n+1}$ is an MFR of a polymer portion produced in the (n+1)th stage, and the polymer (A) produced in the first step having an isotactic pentad ratio (P) and an MFR which satisfy relationship (2):

$$1.00 \geqq P \geqq 0.015 \log MFR + 0.955 \qquad (2)$$

and 0.01 to 1 part by weight of a phosphate compound represented by formula (I):

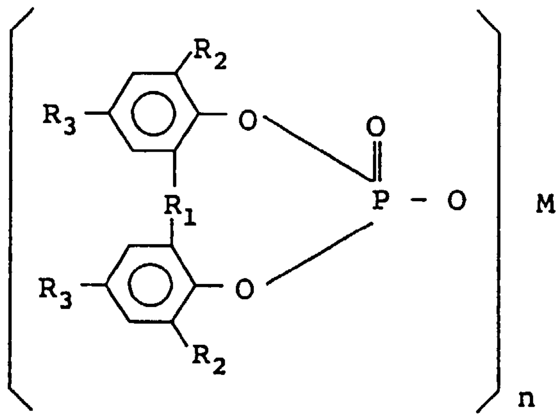

(I)

wherein $R_1$ represents a single bond, a sulfur atom or an alkylidene group having from 1 to 4 carbon atoms; $R_2$ and $R_3$, which may be the same or different, each represents a hydrogen atom or an alkyl group having from 1 to 8 carbon atoms; M represents a mono- to trivalent metal atom; and n represents an integer of from 1 to 3.

**12.** A high stiffness propylene polymer composition as claimed in claim 11, wherein said crystalline ethylene-propylene block copolymer has a melt flow rate of from 0.03 to 50 g/10 min.

**13.** A high stiffness propylene polymer composition as claimed in claim 11, wherein said crystalline ethylene-propylene block copolymer has a melt flow rate of from 0.05 to 10 g/min.

**14.** A high stiffness propylene polymer composition as claimed in claim 11, wherein said crystalline ethylene-propylene block copolymer has a melt flow rate of from 0.10 to 5.0 g/10 min.

**15.** A high stiffness propylene polymer composition as claimed in claim 11, wherein said phosphate compound in sodium 2,2′-methylenebis(4,6-di-t-butylphenyl)phosphate.

**16.** A high stiffness propylene polymer composition as claimed in claim 11, wherein said composition further comprises an inorganic filler.

**17.** A high stiffness propylene polymer composition as claimed in claim 11, wherein said inorganic filler is talc.

**18.** A high stiffness propylene polymer composition as claimed in claim 17, wherein said talc is present in an amount of from 3.5 to 25 parts by weight per 100 parts of the crystalline ethylene-propylene block copolymer.

**19.** A high stiffness propylene polymer composition as claimed in claim 17, wherein said talc is present in an amount of from 5.0 to 20 parts by weight per 100 parts by weight of the crystalline ethylene-propylene block copolymer.

**20.** A high stiffness propylene polymer composition as claimed in claim 17, wherein said talc has an average particle size of not more than 5 µm.

## Patentansprüche

1. Eine hochsteife Propylenpolymerzusammensetzung, umfassend 100 Gew.-Teile eines kristallinen Propylenhomopolymers, das man durch Polymerisation von Propylen in mindestens zwei Stufen auf solche Weise erhält, daß von 35 bis 65 Gew.-% des Gesamtpolymers in der ersten Stufe und von 35 bis 65 Gew.-% des Gesamtpolymers in der zweiten und nachfolgenden Stufe hergestellt wird, wobei die in den jeweiligen Stufen hergestellten Polymerabschnitte eine Grenzviskosität [η] aufweisen, die die Gleichung (1) erfüllt:

$$3{,}0 \leqq [\eta]_H - [\eta]_L \leqq 6{,}5 \quad (1)$$

worin $[\eta]_H$ die Grenzviskosität des Polymerabschnitts mit dem höchsten Molekulargewicht ist; und $[\eta]_L$ die Grenzviskosität des Polymerabschnitts mit dem niedrigsten Molekulargewicht ist,
und das isotaktische Pentaden-Verhältnis (P) des Gesamtpolymers und die Fließfähigkeit (MFR) des Gesamtpolymers, gemessen bei 230°C unter einer Belastung von 2,16 kg, die Gleichung (2) erfüllen:

$$1{,}0 \geqq P \geqq 0{,}015 \log MFR + 0{,}955 \quad (2)$$

und von 0,01 bis 1 Gew.-Teil einer Phosphat-Verbindung der Formel (I):

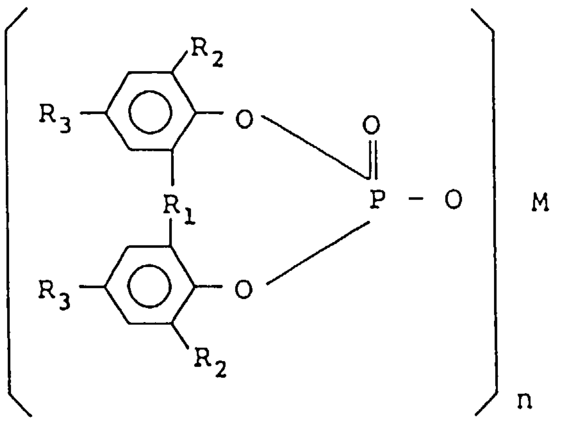

(I)

worin $R_1$ eine Einfachbindung, ein Schwefelatom oder eine Alkyliden-Gruppe, die von 1 bis 4 Kohlenstoffatome hat, bedeutet; $R_2$ und $R_3$, die gleich oder verschieden sein können, jeweils ein Wasserstoffatom oder eine Alkyl-Gruppe mit von 1 bis 8 Kohlenstoffatomen bedeutet; M ein mono- bis trivalentes Metallatom bedeutet; und n eine ganze Zahl von 1 bis 3 ist.

2. Hochsteife Propylenpolymerzusammensetzung gemäß Anspruch 1, worin das kristalline Propylenhomopolymer eine Fließfähigkeit von 0,01 bis 10 g/10 min hat.

3. Hochsteife Propylenpolymerzusammensetzung gemäß Anspruch 1, worin das kristalline Propylenhomopolymer eine Fließfähigkeit von 0,03 bis 2,0 g/10 min hat.

4. Hochsteife Propylenpolymerzusammensetzung gemäß Anspruch 1, worin das kristalline Propylenhomopolymer eine Hochfließfähigkeit (high melt flow rate, HMFR), bei 230°C unter einer Belastung von 10,80 kg gemessen, und eine Fließfähigkeit (MFR) aufweist, die die Gleichung (4) erfüllen:

$$\log HMFR - 0{,}922 \log MFR \geqq 1{,}44 \quad (4)$$

5. Hochfeste Propylenpolymerzusammensetzung gemäß Anspruch 1, worin die Phosphat-Verbindung Natrium-2,2'-methylenbis(4,6-di-t-butylphenyl)phosphat ist.

6. Hochsteife Propylenpolymerzusammensetzung gemäß Anspruch 1, worin die Zusammensetzung ferner einen anorganischen Füllstoff umfaßt.

7. Hochsteife Propylenpolymerzusammensetzung gemäß Anspruch 6, worin der anorganische Füllstoff Talk ist.

8. Hochsteife Propylenpolymerzusammensetzung gemäß Anspruch 7, worin der Talk in einer Menge von 3,5 bis 25 Gew.-Teilen pro 100 Gew.-Teilen des kristallinen Propylenhomopolymers vorliegt.

9. Hochsteife Propylenpolymerzusammensetzung gemäß Anspruch 7, worin der Talk in einer Menge von 5,0 bis 20

Gew.-Teilen pro 100 Gew.-Teilen des kristallinen Propylenhomopolymers vorliegt.

**10.** Hochsteife Propylenpolymerzusammensetzung gemäß Anspruch 7, worin der Talk eine mittlere Teilchengröße von nicht mehr als 5 μm hat.

**11.** Hochsteife Propylenpolymerzusammensetzung, umfassend 100 Gew.-Teile eines kristallinen Ethylen-Propylen-Block-Copolymers, das man durch Copolymerisation in zwei Schritten auf solche Weise erhält, daß im ersten Schritt Propylen oder eine Mischung aus Propylen und nicht mehr als 1 Gew.-% Ethylen in mindestens drei Stufen polymerisiert wird, mit einem hauptsächlich Propylen umfassenden Polymer (A), das im ersten Schritt hergestellt wird und von 60 bis 95 Gew.-% des Gesamtpolymers ausmacht, und nachfolgend im zweiten Schritt Ethylen oder eine Mischung aus Propylen und nicht weniger als 10 Gew.-% Ethylen in einer oder mehreren Stufen polymerisiert wird, mit einem hauptsächlich Ethylen umfassenden Polymer (B), das im zweiten Schritt hergestellt wird und von 5 bis 40 Gew.-% des Gesamtpolymers ausmacht, wobei besagtes Ethylen-Propylen-Block-Copolymer einen Ethylen-Gehalt von 3 bis 20 Gew.-%, bezogen auf das Gesamtpolymer hat und der jeweilige Polymerabschnitt, der in der jeweiligen Stufe des ersten Schritts hergestellt wird, ein solches Molekulargewicht hat, daß die Fließfähigkeit (MFR), gemessen bei 230°C unter einer Belastung von 2,16 kg, die Gleichung 3 erfüllt

$$\log \frac{MFR_n}{MFR_{n+1}} \geqq 1.0 \qquad (3)$$

worin $MFR_n$ der MFR-Wert des in der n-ten Stufe hergestellten Polymerabschnitts ist; und $MFR_{n+1}$ der MFR-Wert des in der (n+1)-sten Stufe hergestellten Polymerabschnitts ist, und das im ersten Schritt hergestellte Polymer (A) ein isotaktisches Pentaden-Verhältnis (P) und einen MFR-Wert hat, die die Gleichung (2) erfüllen:

$$1,00 \geqq P \geqq 0,015 \log MFR + 0,955 \qquad (2)$$

und 0,01 bis 1 Gew.-% einer Phosphat-Verbindung der Formel (I):

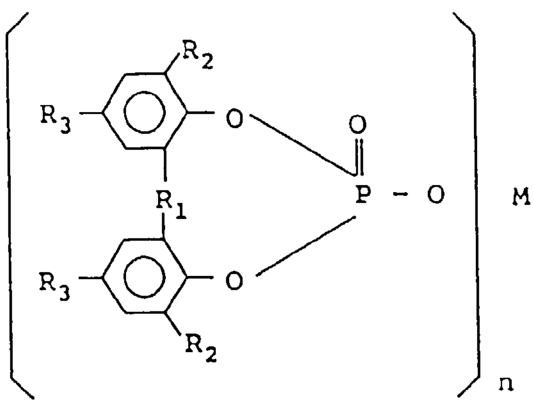

(I)

worin $R_1$ eine Einfachbindung, ein Schwefelatom oder eine Alkyliden-Gruppe mit von 1 bis 4 Kohlenstoffatomen bedeutet; $R_2$ und $R_3$, die gleich oder verschieden sein können, jeweils ein Wasserstoffatom oder eine Alkyl-Gruppe mit von 1 bis 8 Kohlenstoffatomen bedeutet; M ein mono- bis trivalentes Metallatom bedeutet; und n eine ganze Zahl von 1 bis 3 ist.

**12.** Hochsteife Propylenpolymerzusammensetzung gemäß Anspruch 11, worin das kristalline Ethylen-Propylen-Block-Copolymer eine Fließfähigkeit von 0,03 bis 50 g/10 min hat.

**13.** Hochsteife Propylenpolymerzusammensetzung gemäß Anspruch 11, worin das kristalline Ethylen-Propylen-Block-Copolymer eine Fließfähigkeit von 0,05 bis 10 g/10 min hat.

**14.** Eine hochsteife Propylenpolymerzusammensetzung gemäß Anspruch 11, worin das kristalline Ethylen-Propylen-Block-Copolymer eine Fließfähigkeit von 0,10 bis 5,0 g/10 min hat.

**15.** Hochsteife Propylenpolymerzusammensetzung gemäß Anspruch 11, worin die Phosphat-Verbindung Natrium-2,2'-Methylenbis(4,6-di-t-butylphenyl)phosphat ist.

**16.** Hochsteife Propylenpolymerzusammensetzung gemäß Anspruch 11, worin die Zusammensetzung ferner einen anorganischen Füllstoff umfaßt.

17. Hochsteife Propylenpolymerzusammensetzung gemäß Anspruch 11, worin der anorganische Füllstoff Talk ist.

18. Hochsteife Propylenpolymerzusammensetzung gemäß Anspruch 17, worin der Talk in einer Menge von 3,5 bis 25 Gew.-Teilen pro 100 Gew.-Teilen des kristallinen Ethylen-Propylen-Block-Copolymers vorliegt.

19. Hochsteife Propylenpolymerzusammensetzung gemäß Anspruch 17, worin der Talk in einer Menge von 5,0 bis 20 Gew.-Teilen pro 100 Gew.-Teilen des kristallinen Ethylen-Propylen-Block-Copolymers vorliegt.

20. Hochsteife Propylenpolymerzusammensetzung gemäß Anspruch 17, worin der Talk eine mittlere Teilchengröße von nicht mehr als 5 µm hat.

**Revendications**

1. Composition de polymère de propylène de haute rigidité comprenant 100 parties en poids d'un homopolymère de propylène cristallin obtenu en polymérisant du propylène en au moins deux étapes, caractérisée en ce que 35 à 65% en poids du polymère total sont produits dans la première étape et que 35 à 65% en poids du polymère total sont produits dans la deuxième étape et les étapes suivantes, les fractions de polymère produites dans les étapes respectives ayant une viscosité intrinsèque [η] qui satisfait la relation (1):

$$(1) \qquad 3.0 \leqq [\eta]_H - [\eta]_L \leqq 6.5$$

dans laquelle $[\eta]_H$ est une viscosité intrinsèque d'une fraction de polymère ayant le poids moléculaire le plus élevé; et $[\eta]_L$ est une viscosité intrinsèque d'une fraction de polymère ayant le poids moléculaire le plus bas, et le rapport isotactique de quinte (P) du polymère total et le débit de matière en fusion (MFR) du polymère total mesuré à 230°C sous une charge de 2,16kg qui satisfont une relation (2):

$$(2) \qquad 1.00 \geqq P \geqq 0.015 \log MFR + 0.955$$

et de 0,01 à une part en poids d'un composé de phosphate représenté par la formule (I):

(I) 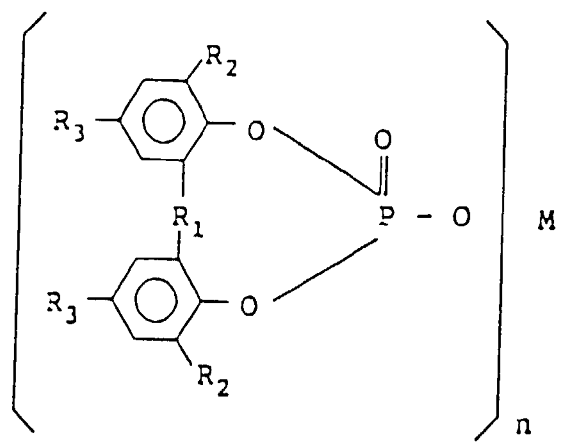

dans laquelle R1 représente une liaison simple, un atome de soufre ou un groupe alkylidène ayant de 1 à 4 atomes de carbone; R2 et R3, qui peuvent être identiques ou différents, représentant chacun un atome d'hydrogène ou un groupe alkyle ayant de 1 à 8 atomes de carbone; M représentant un atome de métal mono, bi ou trivalent; et n représentant un nombre entier compris entre 1 et 3.

2. Composition de polymère de propylène de haute rigidité selon la revendication 1, caractérisée en ce que ledit homopolymère de propylène cristallin a un débit de matière en fusion compris entre 0,01 et 10 g/10 min.

3. Composition de polymère de propylène de haute rigidité selon la revendication 1, caractérisée en ce que ledit homopolymère de propylène cristallin a un débit de matière en fusion compris entre 0,03 et 2,0 g/10 min.

4. Composition de polymère de propylène de haute rigidité selon la revendication 1, caractérisée en ce que ledit homopolymère de propylène cristallin a un haut débit de matière en fusion (HMFR) mesuré à 230°C sous une charge de 10,80 kg et un débit de matière en fusion (MFR) qui satisfont la relation (4):

$$(4) \qquad \log HMFR - 0.922 \log MFR \geqq 1.44$$

**5.** Composition de polymère de propylène de haute rigidité selon la revendication 1, caractérisée en ce que le composé de phosphate est le 2,2'-méthylènebis(4,6-di-t-butyl-phényl)phosphate de sodium.

**6.** Composition de polymère de propylène de haute rigidité selon la revendication 1, caractérisée en ce que ladite composition comprend également une charge inorganique.

**7.** Composition de polymère de propylène de haute rigidité selon la revendication 6, caractérisée en ce que ladite charge inorganique est le talc.

**8.** Composition de polymère de propylène de haute rigidité selon la revendication 7, caractérisée en ce la quantité de talc est comprise entre 3,5 et 25 parties en poids pour 100 parties en poids de l'homopolymère de propylène cristallin.

**9.** Composition de polymère de propylène de haute rigidité selon la revendication 7, caractérisée en ce que la quantité de talc est comprise entre 5,0 et 20 parties en poids pour 100 parties en poids de l'homopolymère de propylène cristallin.

**10.** Composition de polymère de propylène de haute rigidité selon la revendication 7, caractérisée en ce que ledit talc a une taille moyenne de particule ne dépassant pas 5 µm.

**11.** Composition de polymère de propylène de haute rigidité comprenant 100 parties en poids d'un copolymère en bloc éthylène-propylène cristallin obtenu par copolymérisation en deux phases, caractérisée en ce que dans la première phase le propylène ou le mélange de propylène et pas plus de 1% en poids de l'éthylène sont polymérisés en trois étapes au moins, avec un polymère (A) comprenant principalement du propylène produit dans la première phase occupant de 60 à 95% en poids du polymère total, et ensuite dans la deuxième phase de l'éthylène ou un mélange de propylène et pas plus de 10% en poids d'éthylène sont polymérisés en une étape ou plus, avec un polymère (B) comprenant principalement de l'éthylène produit dans la seconde phase occupant de 5 à 40% en poids du polymère total, ledit copolymère en bloc éthylène-propylène ayant une teneur en éthylène comprise entre 3 et 20% en poids basée sur le polymère total, chaque fraction de polymère produite dans chaque étape de la première phase ayant un tel poids moléculaire que le débit de matière en fusion (MFR) mesuré à 230°C sous une charge de 2,16 kg satisfait la relation (3):

$$(3) \qquad \log \frac{MFR_n}{MFR_{n+1}} \geqq 1.0$$

dans laquelle MFRn est un MFR de la fraction de polymère produite dans la nième étape; et MFRn+1 est un MFR d'une fraction de polymère produite dans la n+unième étape, et le polymère (A) produit dans la première phase ayant un rapport isotactique de quinte (P) et un MFR qui satisfont la relation (2):

$$(2) \qquad 1.00 \geqq P \geqq 0.015 \log MFR + 0.955$$

et 0,01 à une part en poids du composé de phosphate représenté par la formule (I):

(I)

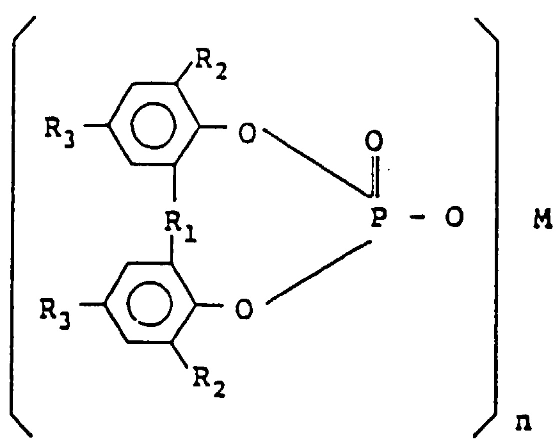

dans laquelle R1 représente un liaison simple, un atome de soufre ou un groupe alkylidène ayant de 1 à trois atomes de carbone; R2 et R3, qui peuvent être identiques ou différents, représentant chacun un atome d'hydrogène ou un groupe alkyle ayant de 1 à 8 atomes de carbone; M représente un atome de métal mono, bi, ou trivalent; et n représente un nombre entier compris entre 1 et 3.

**12.** Composition de polymère de propylène de haute rigidité selon la revendication 11, caractérisée en ce que ledit copolymère en bloc éthylène-propylène cristallin a un débit de matière en fusion compris entre 0,03 et 50 g/10min.

**13.** Composition de polymère de propylène de haute rigidité selon la revendication 11, caractérisée en ce que ledit copolymère en bloc éthylène-propylène cristallin a un débit de matière en fusion compris entre 0,05 et 10 g/10min.

**14.** Composition de polymère de propylène de haute rigidité selon la revendication 11, caractérisée en ce que ledit copolymère en bloc éthylène-propylène cristallin a un débit de matière en fusion compris entre 0,10 et 5,0 g/10min.

**15.** Composition de polymère de propylène de haute rigidité selon la revendication 11, caractérisée en ce que ledit composé de phosphate est le 2,2'-méthylènebis(4,6-di-t-butyl-phényl)phosphate de sodium.

**16.** Composition de polymère de propylène de haute rigidité selon la revendication 11, caractérisée en ce que ladite composition comprend de plus une charge inorganique.

**17.** Composition de polymère de propylène de haute rigidité selon la revendication 11, caractérisée en ce que la charge inorganique est le talc.

**18.** Composition de polymère de propylène de haute rigidité selon la revendication 17, caractérisée en ce que la quantité de talc est comprise entre 3,5 et 25 parties en poids pour 100 parties du copolymère en bloc éthylène-propylène cristallin.

**19.** Composition de polymère de propylène de haute rigidité selon la revendication 17, caractérisée en ce que la quantité de talc est comprise entre 5,0 et 20 parties en poids pour 100 parties en poids du copolymère en bloc éthylène-propylène cristallin.

**20.** Composition de polymère de propylène de haute rigidité selon la revendication 17, caractérisée en ce que ledit talc a une taille moyenne de particule ne dépassant pas 5 μm.